**Europäisches Patentamt**

**European Patent Office**

**Office européen des brevets**

(19)

(11) Veröffentlichungsnummer: **0 013 908**
**B1**

(12) **EUROPÄISCHE PATENTSCHRIFT**

(45) Veröffentlichungstag der Patentschrift: **22.06.83**

(21) Anmeldenummer: **80100108.2**

(22) Anmeldetag: **10.01.80**

(51) Int. Cl.³: **B 23 B 31/34**

(54) Schwenkfutter für Drehmaschinen.

(30) Priorität: **23.01.79 DE 2902421**

(43) Veröffentlichungstag der Anmeldung:
**06.08.80 Patentblatt 80/16**

(45) Bekanntmachung des Hinweises auf die Patenterteilung:
**22.06.83 Patentblatt 83/25**

(84) Benannte Vertragsstaaten:
**AT BE CH FR GB IT NL**

(56) Entgegenhaltungen:
**DE - A - 2 611 923**
**DE - B - 1 092 276**
**DE - C - 546 467**
**DE - U - 7 834 080**
**US - A - 1 938 409**
**US - A - 2 349 119**
**US - A - 2 643 132**
**US - A - 2 732 216**
**US - A - 2 948 542**
**US - A - 2 972 487**
**US - A - 3 096 097**

(73) Patentinhaber: **Firma Wilhelm Blessing**
**Hermann-Löns-Strasse 17**
**D-7302 Ostfildern 2-Nellingen (DE)**

(72) Erfinder: **Becker, Wolfgang**
**D-7441 Grossbettlingen (DE)**

(74) Vertreter: **Raeck, Wilfrid, Dipl.-Ing.**
**Moserstrasse 8**
**D-7000 Stuttgart 1 (DE)**

Courier Press, Leamington Spa, England.

## Schwenkfutter für Drehmaschinen

Die Erfindung betrifft ein Schwenkfutter für Drehmaschinen mit zwei im Futterkörper einander gegenüberliegenden Spannbacken zum zentrischen Spannen eines Werkstückes, bestehend aus radial geführten zylindrischen Backenbolzen, an denen von einem in Verlängerung der Werkzeugspindelachse wirkenden gemeinsamen Antrieb aus betätigte Kraftumlenkeinrichtungen angreifen, sowie aus mit je einem Zapfen in den Backenbolzen zentrisch gelagerten Grundbacken als Träger für das Werkstück fassende Aufsatzbacken, und mit einer den Grundbacken zugeordneten Schwenkeinrichtung, die in bestimmten Schwenkstellungen der Grundbacken verriegelbar und bezüglich der an dem entsprechenden Backenbolzen angreifenden Kraftumlenkeinrichtung an einer radial weiter innen liegenden Stelle angeordnet ist.

Um zweiseitig oder mehrfach symmetrische Werkstücke, z.B. Rohrmuffen oder Werkstücke mit sich kreuzenden Erstreckungsachsen in einer Einspannung nacheinander an zwei bzw. mehr Seiten wirtschaftlich zu bearbeiten, verwendet man automatisch im Lauf indexierende Schwenkfutter, von denen ein Schwenkfutter der eingangs bezeichneten Art aus der US-Patentschrift 2 643 132 bekannt ist. Dies hat den Nachteil, daß es bezogen auf den zu spannenden maximalen Werkstückdurchmesser selbst einen verhältnismäßig großen Durchmesser besitzt. Dies ist darauf zurückzuführen, daß beide Grundbacken in der Nähe der Aufsatzbacken mit Schalträdern versehen sind, die zwischen den Aufsatzbacken und den beiden Tragarmen des Schwenkfutters nicht geführt sind und ungeschützt frei liegen. Nachteilig ist weiterhin, daß die Spannbacken in zwei vom Futterkörper ausgehenden Tragarmen geführt sind, wodurch die beim Spannen auftretenden Gegenkräfte ein Aufbäumen der Tragarme und dadurch Ungenauigkeiten bei der Führung der Spannbacken und daraus resultierend wiederum einen schlechten Spannwirkungsgrad verursachen.

Eine gegenüber den bei der Werkstückbearbeitung am bekannten Schwenkfutter angreifenden Kräften spielfrei wirksame Verriegelung der Grundbacken läßt sich schon deshalb praktisch nicht durchführen, weil die von einem gemeinsamen zentrischen Schaltkolben ausgehenden, mit Schaltklinken versehenen Arme eine ungünstig große ungeführte Länge besitzen, und somit keine brauchbare Abstützung für die Verriegelungskräfte der Spannbacken bilden können. Die die Schalträder aufnehmenden nicht geführten Längenabschnitte der Grundbacken erfordern zur Kompensation übergroße Lagerabstände innerhalb der Tragarme des Schwenkfutters, die dementsprechend radial weit gemacht werden müssen, was die Abmessungen des Schwenkfutters zusätzlich erweitert. Diese Baugröße erhöht sich noch dadurch, daß die ungeschützt angeordneten zweiarmigen Stellhebel für die Spannbewegung der Backenbolzen im Futter radial außen liegen.

Bei einem anderen aus der US-Patentschrift 2 972 487 bekannten, ebenfalls im Lauf indexierenden Schwenkfutter sind die Spannbacken in Winkelhebeln drehbar gelagert, die von einem gemeinsamen zentrischen Spannteil aus zur eigentlichen Spannbewegung angetrieben und dabei teilweise in radial verlaufenden Schlitzen des Futtergehäusekörpers geführt sind. Als Schwenkantrieb ist einem auf einer drehbaren Spannbacke sitzenden Zahnrad ein im Schwenkfuttergehäuse quer zur Schwenkachse verschiebbarer, beidseitig beaufschlagbarer Kolben zugeordnet, der zwischen seinen Enden eine mit dem Zahnrad in Eingriff stehende Schaltkulisse besitzt. Nachteilig bei diesem bekannten Schwenkfutter sind die nicht geführten, in Axialrichtung ausladenden Abschnitte der Winkelhebel, die aufgrund der fehlenden Führung zum Aufbäumen neigen und dadurch einen schlechten Spannwirkungsgrad mitsichbringen.

Der Erfindung liegt die Aufgabe zugrunde, ein Schwenkfutter der eingangs angegebenen Bauart dahingehend zu verbessern, daß seine Spannbacken mit gespanntem Werkstück im Lauf geschaltet bzw. verschwenkt werden können und bei Gewährleistung eines hohen Spannwirkungsgrades ein in Radialrichtung kompakter Gesamtaufbau erreicht wird.

Erfindungsgemäß wird diese Aufgabe dadurch gelöst, daß

a) die Backenbolzen in einem umfangsmäßig geschlossenen, im wesentlichen zylindrischen Abschnitt des topfförmig ausgebildeten Futterkörpers geführt sind,

b) die Schwenkeinrichtung lediglich an der einen der beiden Grundbacken angreift und innerhalb des zylindrischen Abschnittes des Futterkörpers angeordnet ist, und

c) die eine Grundbacken einen von ihrem radial inneren Ende ausgehenden, die Außenseite des Backenbolzens übergreifenden Umfangsrandabschnitt aufweist, der mit äußeren Eingriffsflächen für die Schwenkeinrichtung versehen ist.

Bei der beanspruchten Bauform besitzt der ringsum geschlossene Futterkörper eine günstig hohe Eigensteifigkeit gegenüber sämtlichen auftretenden Betriebskräften, wodurch eine einwandfreie Führung der zylindrischen Backenbolzen sichergestellt ist. Da sich die Führungen während des Spannvorganges nicht wie bei den Tragarmen bzw. Winkelhebeln der vorbeschriebenen bekannten Schwenkfutter durch Aufbäumen bzw. Verbiegen lagemäßig verändern, ist auch während des Spannvorganges eine von Verkantungen und Verklemmungen freie Kraftübertragung möglich, woraus ein hoher Spannwirkungsgrad resultiert, der sich wiederum günstig auf die Bemessung der Kraftumlenkeinrichtungen auswirkt.

Wenn die Schwenkeinrichtung radial weiter innen liegt als die Kraftumlenkeinrichtung, so kann der Schwenkantrieb unter Berücksichtigung seiner starren und gekapselten Führung im steifen Futterkörper günstig dicht an dem zu verschwenkenden Werkstück angreifen, so daß auch die nach der Verschwenkung erfolgende Verriegelung der Grundbacke in vorteilhaft geringem Abstand vom Werkstück durchgeführt wird. Aufgrund dieser Voraussetzungen bleiben die auf das Schwenkwerk einwirkenden äußeren Kräfte, die aus dem Schalten der Spannbacken während des Laufes des Schwenkfutters resultieren und bei höheren Drehzahlen beträchtliche Werte annehmen können, gering, was sich auf die Art und Bemessung des Schwenkwerkes günstig auswirkt. Die abgeschlossene Unterbringung der Schwenkeinrichtung im Futterkörper gewährleistet Betriebssicherheit und Unanfälligkeit gegenüber andernfalls zu erwartenden Verschmutzungen durch Abrieb, Späne, Kühlflüssigkeit usw. Der gesuchte Kompaktaufbau des Schwenkfutters wird außerdem gefördert durch die ineinander geschachtelte Anordnung von Backenbolzen und Grundbacke, wodurch die Lagerung der Grundbacke und die Führung des Backenbolzens wirksam gegen äußere Schmutzeinwirkungen abgeschlossen sind.

In Ausgestaltung des erfindungsgemäßen Schwenkfutters wird vorgeschlagen, daß in einer zylindrischen, sich in Axialrichtung erstreckenden und zwischen dem Zapfen und dem Umfangsrandabschnitt der einen Grundbacke vorgesehenen Nut, die in Richtung auf die Aufsatzbacke geschlossen ist, Radial- und Axial-Lager zur Abstützung der Grundbacke gegenüber einem in die Nut hineinragenden zylindrischen Abschnitt des Backenbolzens angeordnet sind.

Gemäß einer Ausführungsform des Schwenkfutters nach der Erfindung können die Eingriffsflächen am Umfangsrandabschnitt der Grundbacke verzahnt ausgeführt sein und mit der als Zahnstangenkolben ausgebildeten Schwenkeinrichtung in Eingriff stehen. Um von den Werkzeugen und/oder den Massekräften herrührende Beanspruchungen vom Schwenkwerk möglichst fernzuhalten, kann der Umfangsrandabschnitt der einen Grundbacke bestimmten Schwenkstellungen zugeordnete Verriegelungs-Keilnuten enthalten, in die nach vollzogener Backenschwenkung ein Verriegelungskolben vorgeschoben wird.

Soll bei Werkstücken mit sich kreuzenden Achsen wie Armaturen, T-Stützen, Zapfenkreuzen o.dgl. für die Bearbeitung eine Schwenkung von z.B. 4 × 90° durchgeführt werden, so kann bei einer anderen Ausführungsform des erfindungsgemäßen Schwenkfutters der Umfangsabschnitt der einen Grundbacke vierkantförmig mit vier Eingriffsflächen ausgebildet sein und die Schwenkeinrichtung in an sich bekannter Weise aus mehreren, um einen Teil des Schwenkwinkels versetzten hydraulischen Druckzylindern bestehen, deren mit Stoßkanten versehene Kolben nacheinander auf die Kanten der Eingriffsflächen wirken.

Es ist zweckmäßig, wenn die Kraftumlenkeinrichtungen an einen gemeinsamen Spannteller angeschlossene, in Axialkanälen des Futterkörpers geführte Nasenkeilstangen aufweisen, deren Nasenkeile jeweils in eine entsprechende Keilnut des Backenbolzens eingreifen. Die Spannkräfte werden dabei günstig durch die im Futterkörper radial geführten zylindrischen Backenbolzen abgefangen.

Gemäß einer Variante können die Kraftumlenkeinrichtungen jeweils im Futterkörper gelagerte, dreiarmig ausgebildete Winkelhebel aufweisen, deren einer Arm mittelbar mit einem gemeinsamen Spannteller, deren zweiter Arm mit dem zugeordneten Backenbolzen und deren dritter Arm mit einem im Futterkörper geführten Gegengewicht zum Ausgleich der auf den Backenbolzen wirkenden Fliehkräfte in Verbindung steht.

Ausführungsbeispiele der Erfindung sind nachfolgend anhand der Zeichnungen näher erläutert. Es zeigen

Fig. 1 einen Axialschnitt durch ein Zweibacken-Schwenkfutter gemäß der Erfindung,

Fig. 2 eine Frontansicht des Schwenkfutters nach Fig. 1,

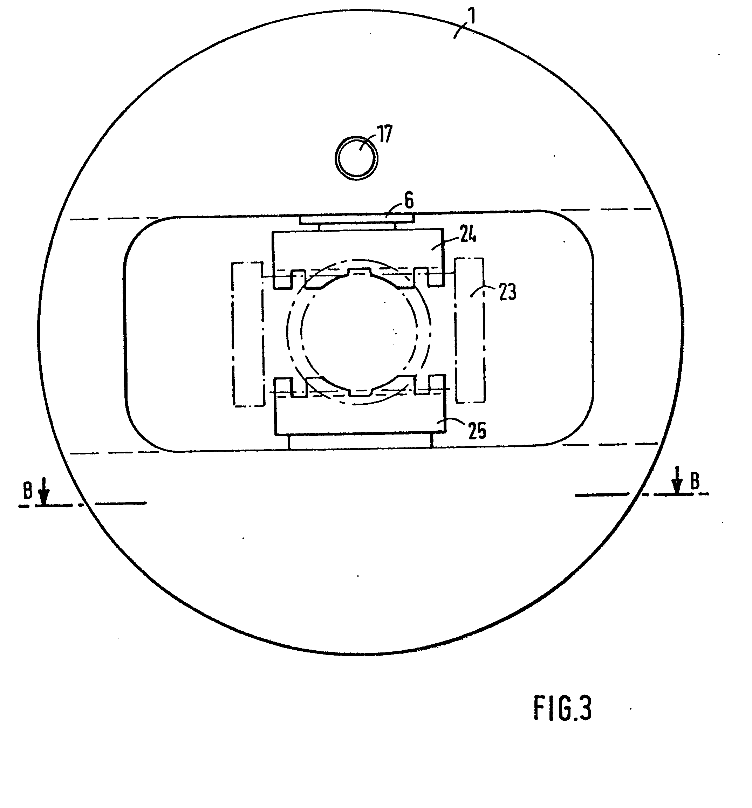

Fig. 3 eine Vorderansicht eines Schwenkfutters ähnlich Fig. 2, jedoch mit einem Schrittschaltwerk zur Spannbackenverschwenkung,

Fig. 4 einen Schnitt nach der Linie A—A in Fig. 2,

Fig. 5 einen Schnitt nach der Linie B—B in Fig. 3 und

Fig. 6 einen axialen Teilschnitt durch ein Schwenkfutter gemäß einer anderen Ausführungsform.

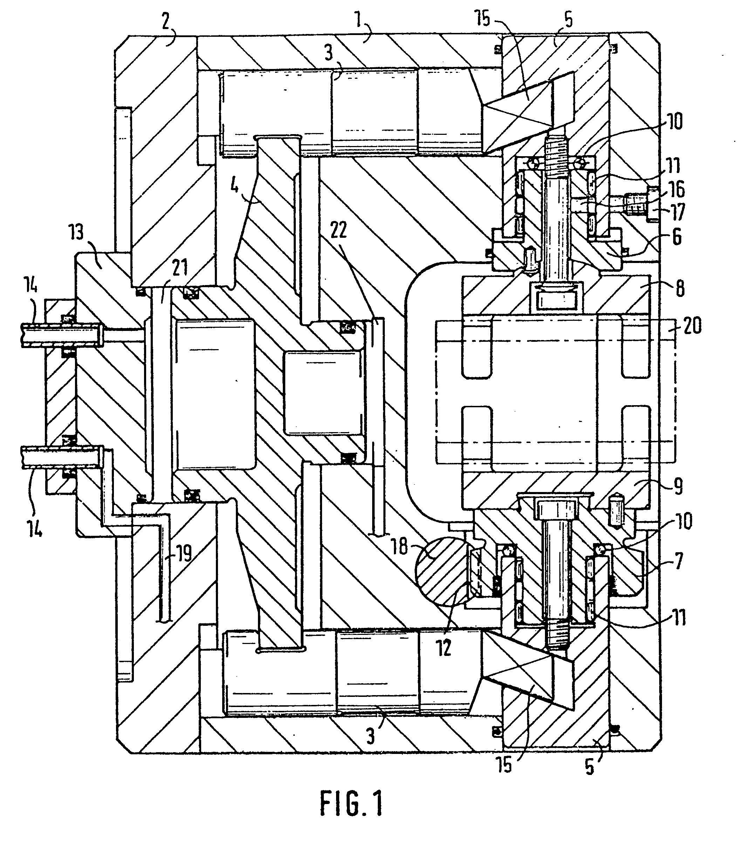

Entsprechend Fig. 1, 2 und 4 ist ein Schwenkfutter zum Spannen und Bearbeiten einer Rohrmuffe 20 in zwei um 180° zueinander verschwenkten Stellungen vorgesehen. Das Schwenkfutter umfaßt einen topfförmigen Futterkörper 1 mit einer radial verlaufenden Grundplatte 2, mit der es auf dem Aufnahmeflansch einer Maschinenspindel befestigt wird. Bei dieser Montage wird das auf der Maschinenspindel zur Verfügung stehende Rohrbündel 14 mit einem am Futter vorgesehenen Ölverteiler 13 verbunden. Hydrauliköl wird vom Rohrbündel 14 aus durch die Kanäle 19 in die Zylinderräume 21 und 22 geführt. Zum Spannen wird der Zylinderraum 21 beaufschlagt, in dem ein als Kolben ausgeführter Spannteller 4 nach rechts in Fig. 1 bewegt wird.

Mit seinem Außenkranz greift der Spannteller 4 in jeweils eine Nut von Nasenkeilstangen 3, die in achsparallelen Kanälen des Futterkörpers 1 geführt sind. Die Nasenkeilstangen 3 werden vom Spannteller 4 nach rechts bewegt und erzeugen über die Keilschrägen 15 eine zur Futterdrehachse radial verlaufende Bewegung von zylindrischen Backenbolzen 5. Drehbare Grundbacken 6 und 7 sind in Bohrungen der Backenbolzen 5 axial und radial durch Rollen 11 und Kugeln 10 oder dergleichen gelagert und abgestützt. Die nicht angetriebene, in Fig. 1 obere, drehbare Grundbacke 6 ist zur sphärischen Lagerung einer Spannbacke 8 mit einer in Fig. 1 gezeigten Kugelpfanne versehen, um möglicherweise vorhandene Abweichungen oder Fehler im Spanndurchmesser des Werkstückes 20 auszugleichen.

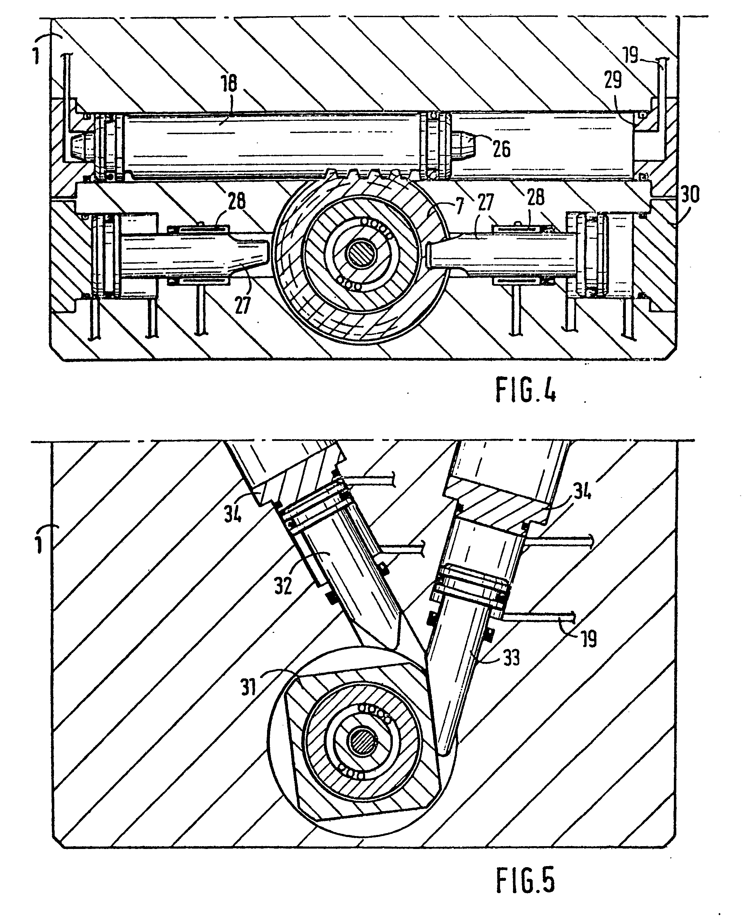

Die untere Spannbacke 9 ist mit der drehbaren unteren Grundbacke 7 verbunden. Wenn die erste Seite des Werkstückes 20 fertig bearbeitet ist, wird einer der beiden Verriegelungskolben 27 (Fig. 4) unter gleichzeitiger Entlastung der Spannhülsen 28 aus der Keilnut der drehbaren Grundbacke 7 gefahren. Nun kann der Schwenkvorgang durch Beaufschlagung einer Kolbenseite des Zahnstangenkolbens 18 über die Kanäle 19 beginnen, wobei die Zähne des Kolbens mit den Zahnlücken der drehbaren Grundbacke 7 kämmen. Um die verschwenkte Masse bei Erreichen der jeweiligen Endlage zu dämpfen, ist der Zahnstangenkolben 18 beidseitig mit einer Endlagendämpfung (Fig. 4) 26 versehen. Nach beendetem Schwenkvorgang rastet ein Verriegelungskolben 27 in die Verriegelungskeilnut der drehbaren Grundbacke 7 ein. Nachdem die Spannhülse 28 eventuell vorhandenes Kolbenstangen-Passungsspiel beseitigt hat, kann die Bearbeitung der zweiten Werkstücksseite beginnen. Es können auch beide Verriegelungskolben 27 gleichzeitig in jeder Schwenkstellung in entsprechende Keilnuten der Grundbacke 7 einfallen.

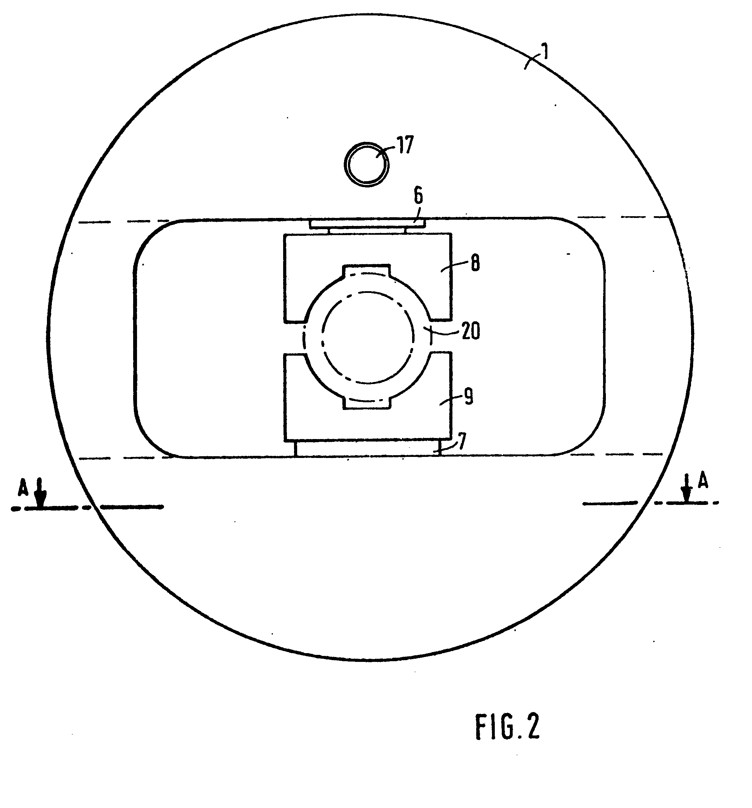

Fig. 2 und 5 zeigen eine Schwenkfutterausführung zum Spannen und Bearbeiten von Dreiwege- oder Vierwege-Armaturen 23. Im Prinzip bleibt die zentrische Spannung, wie in Fig. 1 gezeigt, erhalten; lediglich die Spannbacken 24 und 25 besitzen eine dem Werkstück entsprechend angepaßte Ausarbeitung. Das Schwenkwerk ändert sich insofern, als anstatt von zwei × 180° mit Hilfe des Zahnstangenkolbens 18, nunmehr kontinuierlich 2 × 45° = 90° mittels eines Schrittschaltwerkes geschaltet werden. Hierzu verfährt zuerst der Verriegelungsstößel 33, der über die Kanäle 19 so beaufschlagt wird, daß er einfährt, während der Verriegelungsstößel 32 im Wechselspiel dem Vierkant 31 der unteren Grundbacke an einer der vier Außenflächen weitertransportiert. Im Wechselspiel der hintereinander geschalteten Verriegelungs- und Betätigungskolben fährt der Kolben 32 wieder zurück und gibt den Verriegelungskolben 33 zur kraftschlüssigen Tangentialverriegelung am Vierkant 31 der drehbaren Grundbacke frei.

Um eine die Spannkraft hemmende Beeinflussung beim Spannvorgang durch Reibung oder Verkantung auszuschalten, kann der Verriegelungsstössel 33 kurzzeitig vom Hydraulikdruck entlastet werden.

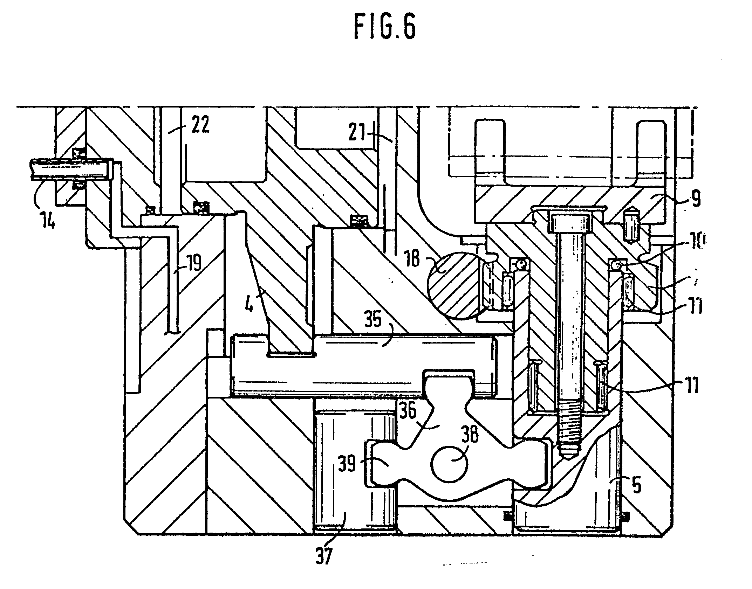

Bei der in Fig. 6 gezeigten Ausführungsform eines Schwenkfutters gemäß der Erfindung sind anstelle der Nasenkeilstangen als Verbindung zwischen dem Spannteller 4 und den Backenbolzen 5 in Axialrichtung im Futterkörper 1 geführte Druckbolzen 35 vorgesehen, in deren Nuten der Außenkranz des Spanntellers 4 eingreift. Im Bereich ihrer anderen Enden stehen die Druckbolzen 35 gelenkig jeweils mit einem Winkelhebel 36 in Eingriff, der um eine Achse 38 im Futterkörper schwenkbar gelagert ist. Das andere, vorzugsweise um 90° versetzte Ende des Winkelhebels 36 steht gelenkig mit dem zugeordneten Backenbolzen 5 in Eingriff, um dessen Radialverstellung zum Spannen zu bewirken. Die Spannkraft wird vom Spannteiler 4 über die Druckbolzen 35 auf die Backenbolzen 5 übertragen.

Der Winkelhebel 36 kann, wie in Fig. 6 gezeigt, dreischenklig ausgebildet sein, wobei der zusätzliche Schenkel 39 in die Nut eines Gegengewichtes 37 eingreift, um die an dem jeweiligen Backenbolzen 5 angreifenden Fliehkräfte insbesondere bei hohen Drehzahlen auszugleichen. Die Ausführungsform mit dem Winkelhebel besitzt gegenüber derjenigen mit den Nasenkeilstangen einen größeren Spannhub.

## Patentansprüche

1. Schwenkfutter für Drehmaschinen mit zwei im Futterkörper (1) einander gegenüberliegenden Spannbacken zum zentrischen Spannen eines Werkstückes (20), bestehend aus radial geführten zylindrischen Backenbolzen (5), an denen von einem in Verlängerung der Werkzeugspindelachse wirkenden gemeinsamen Antrieb (4) aus betätigte Kraftumlenkeinrichtungen (15; 36) angreifen, sowie aus mit je einem Zapfen in den Backenbolzen zentrisch gelagerten Grundbacken (6, 7) als Träger für das Werkstück fassende Aufsatzbacken (8, 9), und mit einer den Grundbacken zugeordneten Schwenkeinrichtung (18; 32, 33), die in bestimmten Schwenkstellungen der Grundbacken verriegelbar und bezüglich der an dem entsprechenden Backenbolzen (5) angreifenden Kraftumlenkeinrichtung an einer radial weiter innen liegenden Stelle angeordnet ist, dadurch gekennzeichnet, daß

a) die Backenbolzen (5) in einem umfangsmäßig geschlossenen, im wesentlichen zylindrischen Abschnitt des topfförmig ausgebildeten Futterkörpers (1) geführt sind,

b) die Schwenkeinrichtung (18; 32, 33) lediglich an der einen der beiden Grundbacken (7) angreift und innerhalb des zylindrischen Abschnittes des Futterkörpers (1) angeordnet ist und

c) die eine Grundbacke (7) einen von ihrem radial inneren Ende ausgehenden, die Außenseite des Backenbolzens (5) übergreifenden Umfangsrandabschnitt (12) aufweist, der mit äußeren Eingriffsflächen für die Schwenkeinrichtung (18; 32, 33) versehen ist.

2. Schwenkfutter nach Anspruch 1, dadurch gekennzeichnet, daß in einer zylindrischen, sich in Axialrichtung erstreckenden und zwischen dem Zapfen und dem Umfangsrandabschnitt (12) der einen Grundbacke (7) vorgesehenen Nut, die in Richtung auf die Aufsatzbacke (9) geschlossen ist, Radial- und Axial-Lager (11 bzw. 10) zur Abstützung der Grundbacke gegenüber einem in die Nut hineinragenden zylindrischen Abschnitt des Backenbolzens (5) angeordnet sind.

3. Schwenkfutter nach Anspruch 1 oder 2, dadurch gekennzeichnet, daß die Eingriffsflächen am Umfangsrandabschnitt (12) der Grundbacke verzahnt ausgeführt sind und mit der als Zahnstangenkolben (18) ausgebildeten Schwenkeinrichtung in Eingriff stehen.

4. Schwenkfutter nach Anspruch 3, dadurch gekennzeichnet, daß der Umfangsrandabschnitt (12) der einen Grundbacke (7) bestimmten Schwenkstellungen zugeordnete Verriegelungskeilnuten enthält, in die nach beendeter Backenschwenkung ein Verriegelungskolben (27) vorgeschoben wird.

5. Schwenkfutter nach Anspruch 1 oder 2, dadurch gekennzeichnet, daß der Umfangsrandabschnitt (31) der einen Grundbacke (7) vierkantförmig mit vier Eingriffsflächen ausgebildet ist und die Schwenkeinrichtung in an sich bekannter Weise aus mehreren um einen Teil des Schwenkwinkels versetzten hydraulischen Druckzylindern besteht, deren mit Stoßkanten (32, 33) versehene Kolben (34) nacheinander auf die Kanten der Eingriffsflächen wirken.

6. Schwenkfutter nach einem der vorhergehenden Ansprüche, dadurch gekennzeichnet, daß die Kraftumlenkeinrichtungen an einen gemeinsamen Spannteller (4) angeschlossene, in Axialkanälen des Futterkörpers geführte Nasenkeilstangen (3) aufweisen, deren Nasenkeile (15) jeweils in eine entsprechende Keilnut des Backenbolzens eingreifen.

7. Schwenkfutter nach einem der Ansprüche 1 bis 5, dadurch gekennzeichnet, daß die Kraftumlenkeinrichtungen jeweils im Futterkörper gelagerte, dreiarmige ausgebildete Winkelhebel (36) aufweisen, deren einer Arm mittelbar mit einem gemeinsamen Spannteller (4), deren zweiter Arm mit dem zugeordneten Backenbolzen (5) und deren dritter Arm (39) mit einem im Futterkörper geführten Gegengewicht (37) zum Ausgleich der auf den Backenbolzen (5) wirkenden Fliehkräfte in Verbindung steht.

## Revendications

1. Mandrin de serrage pivotant pour tours comportant deux mâchoires de serrage situées l'une en face de l'autre dans son corps (1), destinées à serrer une pièce (20) en la centrant, comprenant des chevilles cylindriques (5) guidées radialement qui sont attaquées par des mécanismes de déviation des forces (15; 36) actionnés à partir d'un mécanisme d'entraînement commun (4) agissant dans le prolongement de l'axe de la broche porte-outil, ainsi que des mâchoires de base (6, 7) centrées dans les chevilles de mâchoire par un tourillon chacune, constituant des supports pour des mâchoires rapportées (8, 9) enserrant ladite pièce et un mécanisme de pivotement (18; 32, 33) rattaché aux mâchoires de base pouvant être bloqué dans certaines positions de pivotement des mâchoires de base et placé à un endroit radialement plus à l'intérieur que le mécanisme de déviation des forces attaquant la cheville de mâchoire (5) correspondante, caractérisé en ce que:

a) les chevilles de mâchoires (5) sont guidées dans une section sensiblement cylindrique fermée à la périphérie du corps (1) du mandrin de serrage en forme de pot,

b) le mécanisme de pivotement (18; 32, 33) attaque seulement l'une des deux mâchoires de base (7) et est placé á l'intérieur de la section cylindrique du corps (1) du mandrin de serrage, et

c) cette mâchoire de base (7) présente une section marginale périphérique (12) partant de son extrémité radialement intérieure, surplombant la face extérieure de la cheville de mâchoires (5), qui comporte des surfaces de prise extérieures pour le mécanisme de pivotement (18; 32, 33).

2. Mandrin de serrage pivotant selon la revendication 1, caractérisé en ce que des paliers radiaux et axiaux (11, respectivement 10) sont placés dans une rainure cylindrique dirigée axialement et formée entre le tourillon et la section périphérique marginale (12) de la mâchoire de base (7) envisagée, fermée en direction de la mâchoire rapportée (9), pour soutenir la mâchoire de base en face d'une section cylindrique de la cheville de mâchoire (5) pénétrant dans la rainure.

3. Mandrin de serrage selon la revendication 1 ou 2, caractérisé en ce que les surfaces de prise de la section marginale périphérique (12) de la mâchoire de base sont dentées et engrènent avec le mécanisme de pivotement conformé en piston à crémaillère (18).

4. Mandrin de serrage selon la revendication 3, caractérisé en ce que la section marginale périphérique (12) de la mâchoire de base (7) envisagée comprend des rainures de clavette de verrouillage correspondant à des positions de pivotement déterminées, dans lesquelles peut s'avancer un piston de verrouillage (27), une fois le pivotement des mâchoires achevé.

5. Mandrin de serrage selon la revendication 1 ou 2, caractérisé en ce que la section marginale périphérique (31) de la mâchoire de base (7) envisagée est tétragonale avec quatre surfaces de prise et en ce que le mécanisme de pivotement comprend de façon connue en soi plusieurs cylindres de compression hydrauliques décalés d'une fraction de l'angle de pivotement, dont des pistons (34) comportant des bords d'attaque (32, 33) agissent successivement sur les côtés des surfaces de prise.

6. Mandrin pivotant selon l'une des revendications précédentes, caractérisé en ce que les mécanismes de déviation des forces comportent des tiges de clavettes à talon (3) se raccordant à un plateau de serrage commun (4), guidées dans des canaux axiaux du corps du mandrin de serrage, dont les talons (15) pénètrent chacune dans une rainure de clavette correspondante de la cheville de mâchoire.

7. Mandrin pivotant selon l'une quelconque des revendications 1 à 5, caractérisé en ce que les mécanismes de déviation des forces comportent des leviers coudés (36) à trois bras placés chacun dans le corps du mandrin de serrage, dont un bras est en liaison indirecte avec un plateau de serrage commun (4), dont le second bras est en liaison avec la cheville de mâchoire (5) correspondante et dont le troisième bras (39) est en liaison avec un contrepoids (37) guidé dans le corps du mandrin de serrage destiné à compenser les forces centrifuges agissant sur la cheville de mâchoire (5).

**Claims**

1. Swivel chuck for use on turning machines, having a pair of clamping jaws oppositely disposed to each other within a chuck body (1) for centrical clamping of a work piece (20), each comprising a cylindrical jaw pin (5) guided in radial direction and engaged by force converting means (15; 36) actuated by a common drive (4) acting in axial prolongation of the spindle axis and jaw bases (6, 7) comprising a pin for being centrically mounted in said jaw pins and forming a support for gripping jaws (8, 9) to grip said work piece, and a swivel device (18; 32, 33) associated to one of said jaw bases adapted to be locked at distinct index positions thereof and disposed at a position radially inwards with respect to said force converting means and its engaging the corresponding jaw pin (5), characterized in that

a) said jaw pins (5) are guided within a substantially cylindrical portion of the cup-shaped chuck body (1) having a continuous cylindrical periphery,

b) the swivel device (18; 32, 33) only engages one of said jaw bases (7) and is disposed within said cylindrical portion of said chuck body (1) and

c) said one jaw base (7) has a peripheral rim portion (12) originating from its radial inner end and covering the outer side of the jaw pin (5) and being provided with outer surfaces for engagement by said swivel means (18; 32, 33).

2. Swivel chuck according to claim 1, characterized in that an axially extending cylindrical groove disposed between said pin and said peripheral rim portion (12) of said one jaw base (7) and closed towards said gripping jaw (9) includes radial and axial bearings (11 and 10, resp.) for supporting said jaw base with respect to a cylindrical portion of said jaw pin (5) extending into said groove.

3. Swivel chuck according to claim 1 or 2, characterized in that the outer engagement surfaces on said peripheral rim portion (12) of said jaw base (7) is a geared surface and in engagement with the swivel means having the form of a rack piston (18).

4. Swivel chuck according to claim 3, characterized in that the peripheral rim portion (12) of said one jaw base (7) comprises locking grooves associated to distinct swivel positions for accommodating a locking piston (27) to be advanced after finished swivel motion of said jaws.

5. Swivel chuck according to claim 1 or 2, characterized in that the peripheral rim portion (31) of said one jaw base (7) is square headed having four engagement surfaces, while the swivel device in a manner known per se consists of a plurality of hydraulic actuating cylinders offset with respect to each other by a portion of the swivel angle, the pistons (34) of said cylinders having pusher edges (32, 33) acting one after the other on to the edges of said engagement surfaces.

6. Swivel chuck according to one of the preceding claims, characterized in that the force converting means comprise gib-head key rods (3) connected to a common clamping plate (4) and guided in axial channels of the chuck body, the gib-head keys (15) of which each engaging an associated diagonal groove of the jaw pin.

7. Swivel chuck according to one of the claims 1 to 5, characterized in that the force converting means each comprise angle levers (36) having three legs and pivotally mounted in the chuck body, one of said legs being indirectly connected to a common clamping plate (9), the second leg of which being in connection with the associated jaw pin (5) and the third leg (39) being connected to a counterweight (37), which is guided in the chuck body to compensate centrifugal forces acting on the jaw pin (5).

FIG.1

FIG.2

0013908

FIG.3

3

FIG.4

FIG.5

0 013 908

FIG.6

5